Europäisches Patentamt

European Patent Office

Office européen des brevets

(19)

(11) Publication number: 0 329 921
A1

(12) EUROPEAN PATENT APPLICATION

(21) Application number: 88830067.0

(22) Date of filing: 25.02.88

(51) Int. Cl.⁴: G01C 19/14

(43) Date of publication of application:
30.08.89 Bulletin 89/35

(84) Designated Contracting States:
AT BE CH DE ES FR GB GR IT LI LU NL SE

(71) Applicant: Chiu-Shan, Lee
No. 133-2, Lane 163 San Ho Road Section 4
San Chung City Taipei Hsien(TW)

(72) Inventor: Chiu-Shan, Lee
No. 133-2, Lane 163 San Ho Road Section 4
San Chung City Taipei Hsien(TW)

(74) Representative: Fiammenghi-Domenighetti,
Delfina et al
Racheli-Fiammenghi-Fiammenghi Via
Quattro Fontane 31
I-00184 Roma(IT)

(54) Multiangular vertical and horizontal 3-dimension homo-step surveying instrument.

(57) A multiangular vertical and horizontal 3-dimension homo-step surveying instrument, therein, a pyramid 451 positioned at the top of the hemi-spheroid 4 act as indicator, the latitudinal and longitude lines are positioned at the surface of the hemi-spheroid 4, a suspending hammer 46 is positioned below the hemi -spheroid 4 that do not affected from magnetic field and fixed to the spheroid by an axial rod 45 with scale on the spherical cover and fixed to the base 6 by supporting framing, than a exterior cover with scales positioned onto the spheroid 5, enable to indicate the instrument to act vertical and horizontal display in 3-dimensions from gravity force.

Fig · 4

# MULTIANGULAR VERTICAL AND HORIZONTAL 3-DIMENSION HOMO-STEP SURVEYING INSTRUMENT

This invention relates to multiangular vertical and horizontal 3-dimension homo-step surveying instrument.

According to the conventional testing appartus and precision instrument, it has to be tested or produced in horizontal condition, therefore it is necessary to position a horizontal installation on it in order to provide a basis of horizontal, most of them adopt bubble tube, owing to low sensitivity and accuracy of the bubble tube, the error affect seriously the precision and the quality of the product. In the construction engineering it is always adopted a hose with pouring water to survey a comparative level, but the water levels may be different because of different thickness of plastic hose, thus error will created due to the water level surveyed by the still water level of hose in the both sides, in view of the said defeats, the inventor has invented a "Multiangular vertical and horizontal 3-dimension homo-step surveying instrument" that shows precise scale of objective with three different uses in one dimension and signs with ink, to achieve saving time and precision are characterized.

The present invention provides a "multiangular vertical and horizontal 3-dimension homo-step surveying instrument" especially described a testing apparatus that can survey prescisely vertical, horizontal or any slope. It concert the hammer that do not affect from magnetic field to show vertical or horizontal with indicator or scale, and draw standard straight line with ink or rule on it, the indicator or scale also can be a horizontal reference basic line for other surveying apparatus and precision instrument to be characteristic.

Embodiments of the invention are described in detail below with reference to drawings, in which:

Fig. 1 is the prospective sketch of one dimension testing apparatus for the present invention.

Fig. 2 is the disassembly sketch of one dimension testing apparatus for the present invention.

Fig. 3 is the prospective sketch of the present invention.

Fig. 4 is the disassembly sketch of the present invention.

Fig. 5 is the cross - section sketch of the present invention.

Fig. 6 is the prospective coordinate sketch of the present invention.

Fig. 7 is the top view coordinate sketch of the present invention.

Fig. 8 is the sketch of the enlargement of the horizontal point.

Fig. 9 is the sketch of the enlargement of the vertical point.

Fig. 10 is the sketch of the hemi - spherical formed with the enlargement combined by the horizontal and the vertical points.

Fig. 11 is a plan illustrating an application of the present invention to two tapes.

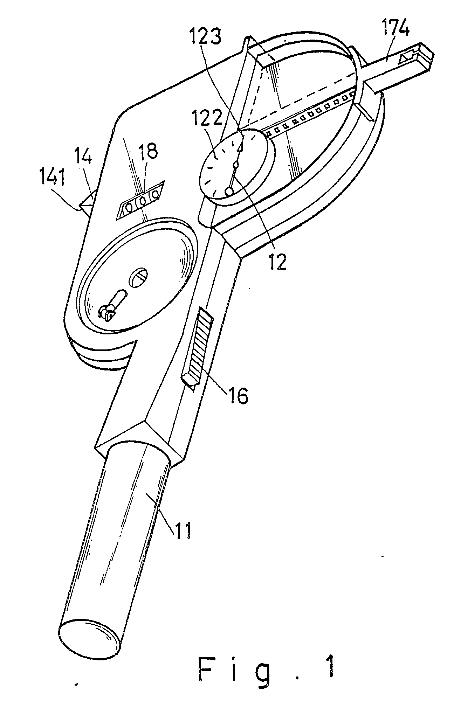

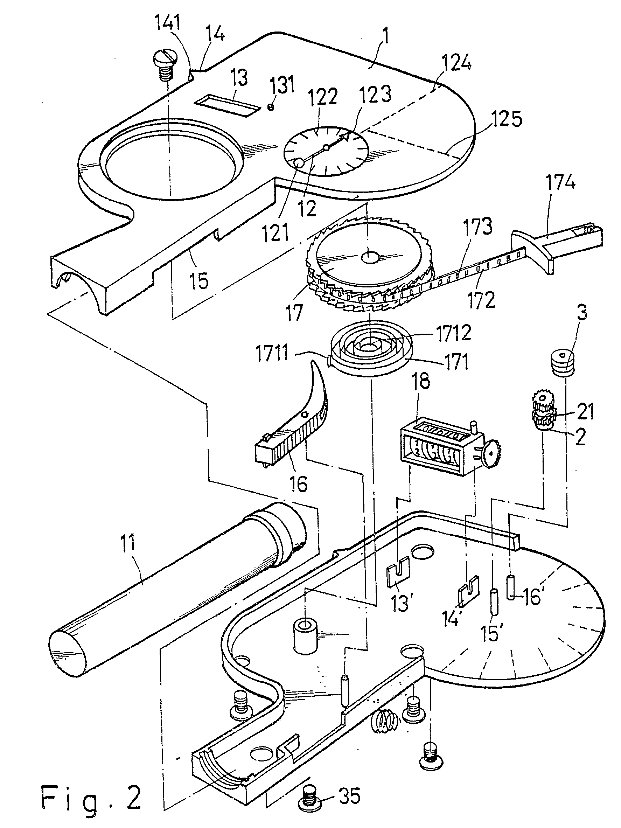

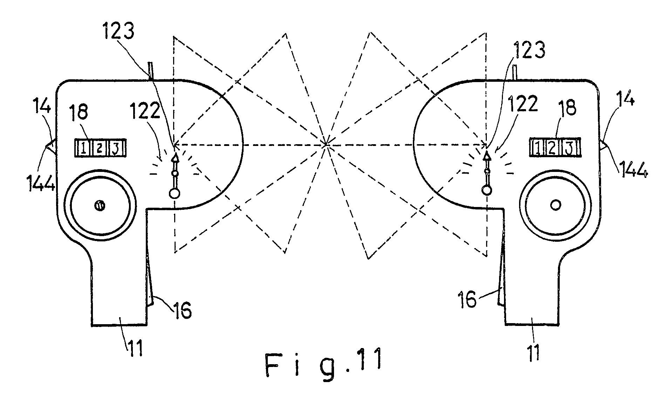

As shown in Fig. 1 and 2 as three different use methods in one dimension, a indicator 12 is positioned on the cover 1, a hammer 121 that do not affect from magnetic field is positioned at the other end of the indicator 12 to make it indicate the vertical point 123 on the scale 122 precisely for gravity force, vertical line 124 and horizontal line 125 can be drawn by extending from the scale 122, a square concave groove 13 is positioned on the cover 1 to set a counter 18, a concave 131 is also positioned to adjust the counter. A tip convex 14 with a convex point 141 is positioned, the convex point has to be parallel with the horizontal line 125 for convenience to use, a handle 11 is sleeved under the cover 1, a square concave groove 15 is positioned at the cover 1 so that the button 16 can contral the rotation of the ratchet 17, a whirling spring 171 is positioned inside the ratchet 17 to roll the rolling rule 172, many little holes 173 are positioned on the rolling rule 172 to drive the counter 18, and block it by a block 174, the ratchet 17 is sleeved in the fixing axis 11$'$ of the downcover 1$'$, one end of the whirling spring 171 is sleeved with the rod 12, and the other end 1712 of the whirling spring is sleeved into the ratchet 17 to enable the ratchet 17 can contract automatically, the rolling rule 172 is pulled outside between the teethes 21 of the gear 2 and the concave groove 31 of the roller 3, enable the resistance to be minimun and the length to be shown atuomatically while it is pulled, two racks 13$'$ 14$'$ are fixed respectively to the counter 18, the roller 3 is sleeved into the rod 16$'$, the gear 2 is sleeved with the rod 15, enable it to form one after the up and down cover are sleeved to each other, and the rolling rule can be pulled out from the horizontal line 125, the said whirling spring 171 can be used to roll short rolling rule back, when the rolling rule is pulled out excessively, it also can be rolled back by hand. Instead of the said rolling rule, ink can be used for more uses. For sake of. precision, as shown in Fig.11, both ends can be aimed at horizontal lines respectively.

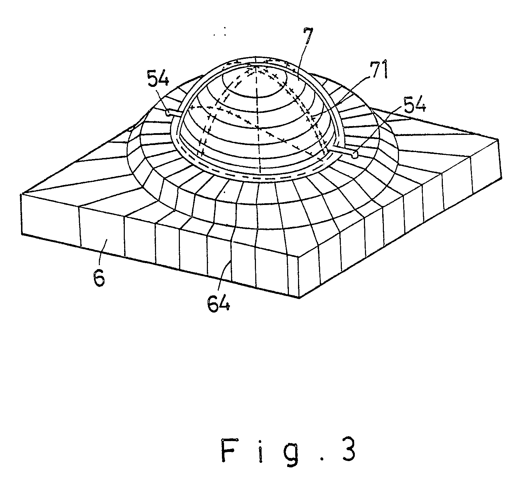

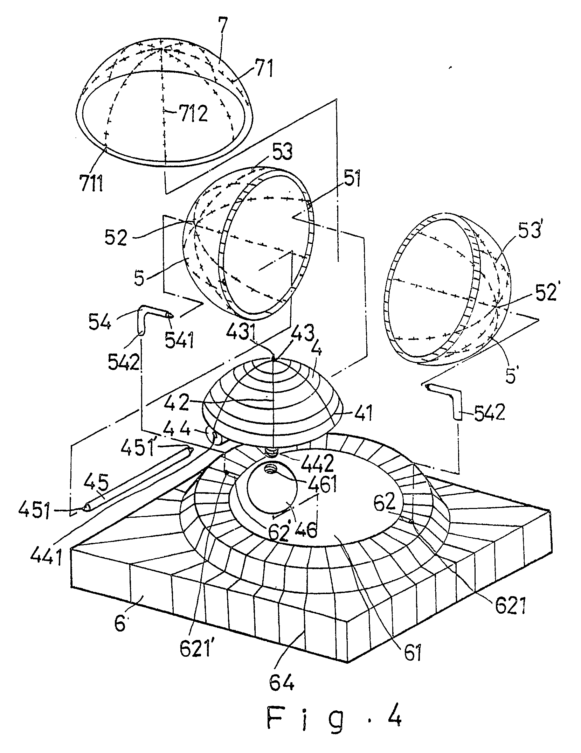

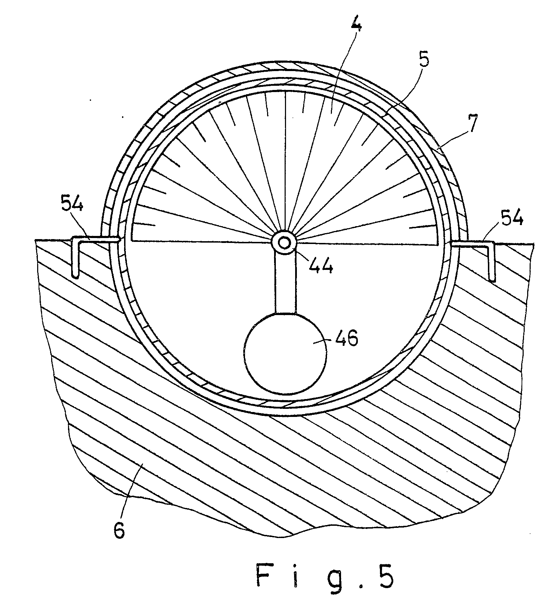

As shown in Fig. 3 to 5, three dimensions use method and homo-step reading of the present invention shaped hemi-spheroid 4, latitude 41 and longitude 42 are positioned on the surface of the hemi-spheroid 4, a tip 431 is positioned on top 43 of the hemi-spheroid 4 to be a basic point of scale, the hemi - spheroid 4 is hollow to form an arc surface, an axis sleeve 44 is positioned passing through center of the circle at the bottom, a hole 441 is positioned at the axial sleeve 44 to enable the rod 45 passing through it, both ends 451 451' of the rod 45 are in shaped of pyramid, enable the pyramid 451 451' to be positioned into the concaves 51 51' inside the spheroid 5, make the rod 45 is passing through center of circle of the spheroid 5, then, sleeves an other spheroid 5' in and stick to fix at the other side of the spheroid 5 to form a spheroid. If the resistance of the contact surface between the said pyramid 451 451' and the concaves 51 51' is minimum, the sensitivity will be maximum.

A rod 442 is positioned at center of the axial sleeve 44 to be sleeved or screwed with the hole 461 of the hammer 46.

Scales 53 53' and holes 52 52' are positioned on the surface of the spheroid 5 5' of the present invention, the hole 52 52' have to be perpendicular with the concave 51 51' and pass through the center point of the spheroid surface 5 5', enable the tips 541 541' of the racks 54 54' to be fixed, the racks 54 54' are in shaped of L with one end 542 542' to be inserted respectively in the hole 62 62' of the base 6, so the hemi-spheroid 4 can show the lean at any angle in 360°. A round concave 61 is positioned on the base. 6 to provide the sphere rotating, extending lines in various angle are positioned on the base 6 for convenience of drawing and surveying. If the resistance of the contact surface between the holes 52 52' and the tips 541 541' is minimum, the sensitivity will be maximum.

Scale 71 are also positioned on the surface of the cover 7, the scale 71 correspod respectively with the scale 53 on the surface of the sphere 5 and the scale 41 42 on the surface of the hemi-spheroid 4, when the cover 7 is fixed on the base 6, the hammer 46 lean by terrestrial gravity to get whether the objective inclining or not, or draw standard horizontal or vertical basic line.

The said base 6 is fixed in half plane for surface of hemi-sphere, it also can be made in spheroid to show at free angle if necessary, that can be suitable for some specific uses such as airplane etc.

The principles and the practices of the present invention;

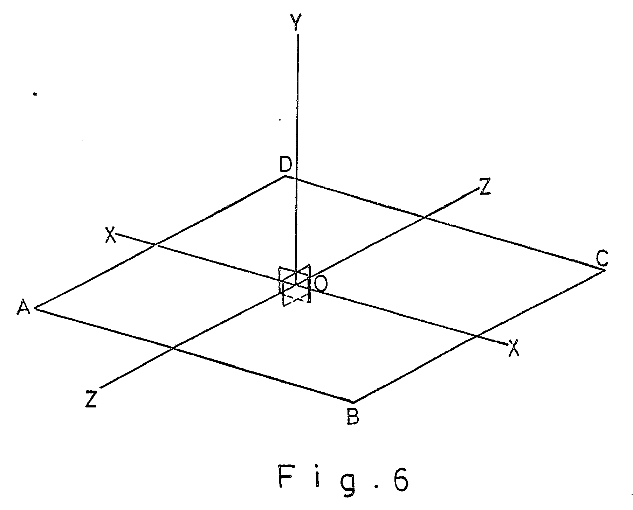

As shown in Fig. 6, suppose the parallel lines of the racks 54 54' of the present invention is Z axis, the rod 442 on top of the hammer 46 is Y axis, axial rod is X axis, move the base till the axes are on right place, thus the angle will be read precisely. The prospective scale on the surface of the hemi-sphere 4 are divided with the longitude 42 and the latitude 41, the surface of the sphere and the surface 7 of the hemi-sphere are fallen in angle and formed the lines of scale, the latitude 41 and the longitude 42 on the hemi-sphere 4 coordinates the scale 53 on the round sphere 5 to read the slope 360° left to right, the scale 53 on the sphere 5 coordinates the scale on the cover 7 to read the slope 360° in an other angle.

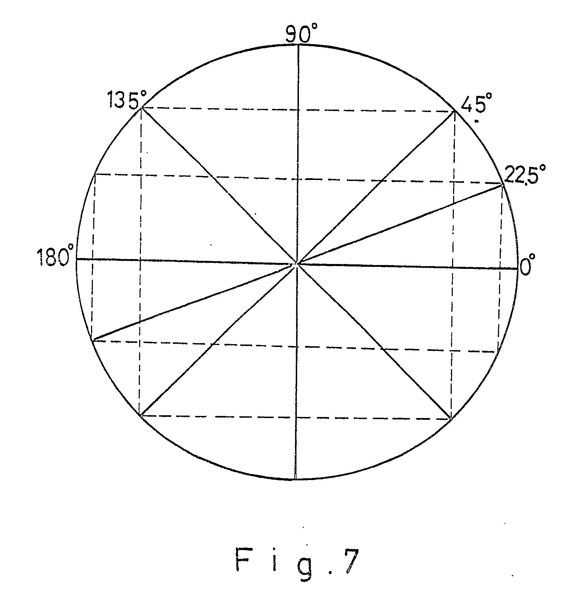

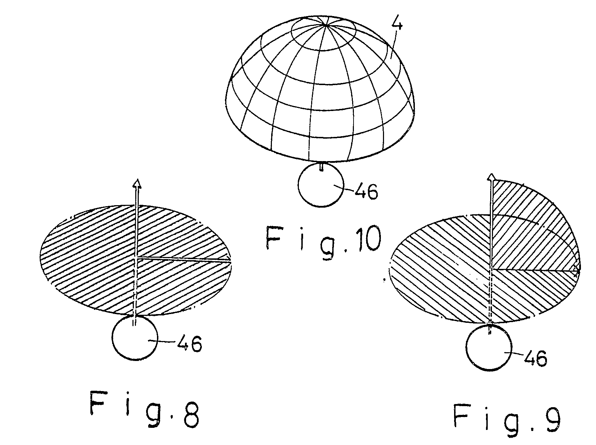

As shown in Fig. 7 to 10, the horizontal of the present invention is perpendicular to the indicator, fixs the indicator and rotates the horizontal on the horizontal plane to be a horizontal plane, all that along with the horiontal plane are horizontal point, and all that parallel with the horizontal plane are horizontal basic line.

The perpendicular line that form an area shaped fan with the horizontal plane by the indicator, fixs the horizontal plane, and rotates the fan shaped area that formed by the perpendicular indicator and the horizontal plane to form a hemi-sphere, the hemi -sphere is the extension of the horizontal point and the perpendicular point.

The surface of the hemi-sphere 4 are divided into longitude and latitude in 360°, and the scales of the scale lines with the horizontal, perpendicular and the cover.

An axial rod 45 on the hemi-sphere 4 is positioned to fix, enable the hemi-sphere 4 is fixed in the spheroid 5 by the rod 45, the hemi-sphere can rotate 360° left and right with the hammer 46, and the surface of the spheroid 5 also is marked with scale 360° to read the angle in direction of left or right.

Two racks 54 54' at both ends of the horizontal diameter on the surface of the sphere 5 propped the whole weight of the sphere 5, enable the sphere 5 rotates 360° front and back, the racks 54 54' are fixed at the base 6, a concave on the base is positioned to provide the spheroid 5 rotating, enable the surface is fallen with the scale of latitude and longitude in 360°. When the sphere rotates front and back, the angle can be read whether front or back.

The prospective scale of the present invention that develop utilization from perpendicular to longitude, from horizontal to latitude plane, circumference 360° is marked with scale, each point that longitude and latitude intersects can be a reading point, thus the horizontal and vertical can be read at free angle.

The reading way of the present invention is: the longitude and the latitude on the hemi-sphere and the 360° scale on the sphere coordinate the longitude and the latitude on the surface of the hemi-sphere, the scales of them correspond to each other, when all that are at right place, that is homo-step of horizontal and vertical, and the change in horizontal or vertical can be gotten by two points of scale at any angle on the cover.

The following preferred embodiment for application to the present invention are:

1. The present invention can be applied with a straight rule, a square rule or any other rule, standard horizontal, vertical or slope can be drawn without leaning by the same rule.

2. It even can draw standard horizontal, vertical, angle and circle when using with a round ruler.

3. When the present invention is applied at prospective coordinate, all of engireering, building, decoration, such as door frame, mansion, dam etc, it can read the slope of space and the standard and the change.

4. The present invention can be applied precise instrument or product of apparatus etc., it can read the instrument whether horizontal or not to increase the precision.

5. The present invention can cooperate a compass for basic flight guide angle of flying objective, ship, dive, laser level.

6. It can cooperate with inkhorn to make standard basic line for convenience of engineering.

7. The present invention can be developed utilization from perpendicular to longitude, from horizontal to latitude, and marks with scale 360° on the circumference, so that the intersection point of longitude and latitude is the reading point, to read the horizontal and the perpendicular in homo-step at free angle.

The base 7 of the present invention can be made in transparent sphere or dish-shaped, or combine into one with the cover, for convenience in homo-step reading at three dimension.

When the intersection point of the said horizontal basic line to perpendicual basic line, and the perpendicular longitude an horizontal latitude is at horizontal and perpendicular, the center basic also is the homo-step reading of intersection point of periphery.

## Claims

1. A multiangular vertical and horizontal 3-dimensions homo-step surveying instrument comprising:
- a hemi - spheroid, with latitude and longitude on the sur - face, a tip shaped in triangle is positioned on top of it as a basic of scale, an axial sleeve is positioned with a rod inside at center of circumference sleeving with a hammer;
two sphere that the concave part is positioned at suitable part through the interior center, scales are also positioned on both sur-faces, holes are positioned at suitable place passing through center of circle, enable the tips of the racks insert in;

- a cover with scale on surface that can be adjusted;
- a base with extension of angle scale on it, holes to fix the racks and a base to sleeve the cover are also positioned on it;
In use of said assemblies, the basic references of the angles, horizontal and vertical lines will form 3-dimensions assembles.

2. A multiangular vertical and horizontal 3-dimensions homo-step surveying instrument as claimed in claim 1 wherein a hammer not afferected by msgnetic field is positioned at down end of the rod of hemi-spheroid, with terrestrial gracity it indicate horizontal, perpendicular or angular line exactly.

3. A multiangular vertical and horizontal 3-dimensions homo-step surveying instrument as claimed in claim 1 wherein several longitudes and latitudes are positioned on surface of the hemi-spheroid, a triangle convex is also positioned on the top for reference of basic line.

4. A multiangular vertical and horizontal 3-dimensions homo-step surveying instrument as claimed in claim 1 wherein the hole on axial sleeve of the hemi-spheroid has to coordinate with the axial rod, enable the resistance between the pyramids at two ends of the axial rod and the concaves of the spheroid to be minimum; also increase the sensitivity.

5. A multiangular vertical and horizontal 3-dimensions homo-step surveying instrument as claimed in claim 1 wherein the holes on the surface of the spheroid have to coordinate the tips of the racks, enable the resistance of contact surface to be minimum, and also increase the sensitivity.

6. A multiangular vertical and horizontal 3-dimensions homo-step surveying instrument as claimed in claim 1 wherein the base can be made in transparent spheroid if necessary, enable it to do any mark display of 3-dimensions.

7. A multiangular vertical and horizontal 3-dimensions homo-step surveying instrument as claimed in claim 1 wherein the application for one dimension can be set in the inkhornm the equal structures are positioned on both ends of the ink line, enable the extension of the both ends of the ink line coincide with the horizontal line to enhance the accuracy of the ink line.

8. A multiangular vertical and horizontal 3-dimensions homo-step surveying instrument as claimed in claim 1 wherein it can be positioned if necessary, such as surveying apparatus, rule, rolling rule, square rule, drawing table to be the reference in horizontal of presicse instrument or perpendicular of hanging hammer.

9. A multiangular vertical and horizontal 3-dimensions homo-step surveying instrument as claimed in claim 1 wherein it also can coordinate compass to survey the position and the direction in three dimension for use of flying object, submarine, ship, or laser level or radar etc.,

10. A multiangular vertical and horizontal 3-dimensions homo-step surveying instrument as claimed in claim 1 wherein 3-dimensions is a structure of hemi-spheroid to be a basic ordinates of horizontal and perpendicular with indicator.

11. A multiangular vertical and horizontal 3-dimensions homo-step surveying instrument as claimed in claim 1 wherein the base and the cover of the instrument of the 3-dimensions can be made in transparent if necessary.

12. A multiangular vertical and horizontal 3-dimensions homo-step surveying instrument as claimed in claim 1 wherein the hemi-spheroid, the spheroid and the cover have positioned with following; perpendicular that parallel with the indicator and perpendicular with the horizontal form an area shaped fan, all in the area that parallel with the perpendicular indicator are perpendicular, fixs the horizontal plane and rotates the fanshaped area to form a hemi-spheroid, that is the extension of horizontal point and perpendicular point, the surface of the hemi-spheroid is divided in 360°, longitude and latitude are also positioned on it as scale of horizontal, perpendicular and cover.

13. A multiangular vertical and horizontal 3-dimensions homo-step surveying instrument as claimed in claim 1 wherein the hemi-spheroid is fixed in the spheroid with an axial rod, enable the hemi-spheroid to rotate 360° left and right with hammer, the surface of the spheroid are marked with scale for reading of directional angle left and right.

14. A multiangular vertical and horizontal 3-dimensions homo-step surveying instrument as claimed in claim 1 or 12 wherein two ends on horizontal diameter on surface of the spheroid are propped with racks to prop the whole spheroid, the racks are fixed on the base, an arc concave is also positioned on the base to provide the spheroid rotating, a hemi-spherical cover with latitude and longitude in 360° on the surface, enable the spheroid to rotate front and back, and the angle of direction in front or back can be read.

15. A multiangular vertical and horizontal 3-dimensions homo-step surveying instrument as claimed in claim 1 or 12 wherein the horizontal plane is induced to operate onto the latitudinal plane and divided scales equally to 360° circle, the point of intersection of the longitude and latitude act as surveying point, therefore, horizontal and vertical situation will be surveyed in different inclined angles.

16. A multiangular vertical and horizontal 3-dimensions homo-step surveying instrument as claimed in claim 1 or 12 wherein the latitude and longitude and 360° scales of the hemi-spheroid act to survey with the latitude and longitude of the cover, the scales of the three parties have corresponding positions, therefore, vertical and horizontal positions will act homo-step when the corresponding positions of three parties are coincided to achieve vertical and horizontal on step and vertical or horizontal situation will be known from two scales of any inclined angle of external, then the angle will be surveyed from the scale of the cover.

17. A multiangular vertical and horizontal 3-dimensions homo-step surveying instrument as claimed in claim 1 or 12 wherein the longitude induce to parallel with the horizontal to the spherical longitude of the longitude plane.

18. A multiangular vertical and horizontal 3-dimensions homo-step surveying instrument as claimed in claim 1 or 12 wherein the latitude induce perpendiculary to the spherical latitude of latitudinal plane and parallel to the vertical line.

19. A multiangular vertical and horizontal 3-dimensions homo-step surveying instrument as claimed in claim 1 or 12 wherein the angle display the nominated angle from the point of intersection of the vertical latitude and horizontal longitude.

20. A multiangular vertical and horizontal 3-dimensions homo-step surveying instrument as claimed in claim 1 or 12 wherein the interior and exterior cover of the spheroid, as the horizontal and vertical line are in horizontal and vertical situation respectively, the center line act the exterior interaction point of the horizontal and vertical line with the angular line achieve homo-step surveying point.

21. A multiangular vertical and horizontal 3-dimensions homo-step surveying instrument as claimed in claim 1 or 12 wherein the latitute and longitude on the hemi-spheroid is placed on the external surface of spheriod and the scale on the spheriod can be put on the hemi-spheriod wherever required.

F i g . 1

Fig. 2

Fig . 3

Fig . 4

Fig.5

Fig.6

F i g . 7

Fig.10

Fig.8

Fig.9

Fig.11

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | US-A-2 385 424 (SHUE) <br> * Figure 5; claim 3 * | 1 | G 01 C 19/14 |
| A | US-A-4 106 207 (BOYETT et al.) <br> * Figures 1,2; column 2, lines 1-35 * | 1 | |
| A | DE-A-2 134 711 (DIEM) <br> * The whole document * | 1 | |
| A | GB-A-2 177 202 (GRAVELLE) <br> * Figure 1; abstract * | 1 | |

TECHNICAL FIELDS SEARCHED (Int. Cl.4)

G 01 C

The present search report has been drawn up for all claims

| Place of search | Date of completion of the search | Examiner |
|---|---|---|
| THE HAGUE | 27-10-1988 | KOLBE W.H. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

                    

& : member of the same patent family, corresponding document

EPO FORM 1503 03.82 (P0401)